# EUROPÄISCHE PATENTSCHRIFT

(11) **EP 1 786 614 B1**
(45) Veröffentlichungstag und Bekanntmachung des Hinweises auf die Patenterteilung: **14.10.2015**
(21) Anmeldenummer: 05783025.9
(22) Anmeldetag: 19.08.2005
(51) Int. Cl.: B29C 49/58, B29C 49/48, B29C 49/12, B29K 67/00, B29K 27/06

(54) **VERFAHREN ZUR HERSTELLUNG EINER KUNSTSTOFFFLASCHE**
METHOD FOR PRODUCING A PLASTIC BOTTLE
PROCEDE POUR REALISER UNE BOUTEILLE EN PLASTIQUE

(30) Priorität: 10.09.2004 CH 14942004; 07.12.2004 CH 20252004
(43) Veröffentlichungstag der Anmeldung: 23.05.2007
(73) Patentinhaber: Alpla-Werke Alwin Lehner GMBH & Co.KG, 6971 Hard (AT)
(72) Erfinder: LEHNER, Alwin, A-6971 Hard (AT); KÜNZ, Johann, A-6971 Hard (AT); DÜRINGER, Markus, A-6972 Fussach (AT)
(74) Vertreter: Hasler, Erich
(86) Internationale Anmeldenummer: PCT/EP2005/008971
(87) Internationale Veröffentlichungsnummer: WO 2006/027092

(56) Entgegenhaltungen:
- WO-A-98/52729
- US-A- 4 615 667
- US-A1- 2002 037 338
- US-B1- 6 264 050
- US-B1- 6 273 705
- PATENT ABSTRACTS OF JAPAN Bd. 0031, Nr. 09 (C-058), 12. September 1979 (1979-09-12) & JP 54 086560 A (MITSUBISHI PLASTICS IND LTD), 10. Juli 1979 (1979-07-10)

## Beschreibung

Die Erfindung betrifft Verfahren zur Herstellung einer Kunststoffflasche, insbesondere einer PET-Flasche, in einem Blas- bzw. Streckblasverfahren gemäss dem Oberbegriff des Patentanspruchs 1.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung von schüttfähige Medien, beispielsweise von Reinigungsutensilien, Körperpflegemitteln, Kosmetika, Kfz-Medien, usw., kommen hauptsächlich Kunststoffbehältnisse zum Einsatz. Das geringe Gewicht und die geringeren Kosten spielen sicher eine nicht unerhebliche Rolle bei dieser Substitution. Die Verwerdung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die am häufigsten eingesetzten Kunststoffflaschen bestehen aus Polyethylenterephthalat bzw. PET und werden in einem sogenannten Spritzblas- bzw. Spritzstreckblasverfahren hergestellt. Bei diesen Verfahren handelt es sich um eine Kombination aus Spritzgiessen und Blasformen. Dabei wird zunächst in einem Spritzgiessprozess in einer Spritzform ein Preform hergestellt. Neuerdings sind auch Fliesspressverfahren zur Herstellung von Preforms vorgeschlagen worden. Der Preform weist einen im wesentlichen länglichen, zylindrischen Körper auf und ist an einem Längsende geschlossen ausgebildet. Ein Supportring trennt den Körper von einem Halsabschnitt mit einer Ausgiessöffnung. Dieser Halsabschnitt weist üblicherweise bereits die spätere Form des Flaschenhalses auf. An der Aussenseite dieses Halsbaschnitts sind auch meist bereits Gewindeabschnitte oder dergleichen für die Festlegung eines Verschlussteils ausgebildet. Der Preform wird nach seiner Herstellung in einem Kunststoffspritzverfahren aus der Spritzform entformt, bei Bedarf konditioniert und in eine Blasform einer Blasmaschine eingebracht, in welcher er schliesslich mit Überdruck auf die gewünschte Form aufgeblasen wird. Im Spritzstreckblasverfahren wird der gespritzte Preform beim Blasprozess zusätzlich mit einem Reckdom verstreckt. Es ist auch bereits ein Spritzblasverfahren bekannt, bei dem der Blasprozess direkt anschliessend an das Spritzen des Preforms erfolgt. Der Preform verbleibt dabei auf dem Spritzdorn, und eine Teil der Spritzform bildet einen Abschnitt der Blasform.

Der Supportring dient zum Transport des Preforms in der Blasmaschine und zur Abstützung des Preforms an der Oberfläche der Blasform. Bei einem Typ von Blasmaschinen bildet die Oberfläche des Supportrings zugleich eine Dichtfläche für die Mündung der Blasdüse der Blasmaschine. Dies bedingt aber eine Blasdüse mit einem relativ grossen Durchmesser, da ja der den Supportring überragende Teil des Halsabschnitts von der Blasdüse aufgenommen werden muss. Berücksichtigt man, dass an der Aussenfläche des Halsabschnitts bereits Gewindeabschnitte oder dergleichen ausgebildet sind, so ist unmittelbar ersichtlich, dass der Innendurchmesser der Blasdüse sehr gross ausgebildet sein muss, damit es zu keinen Beschädigungen des Halsabschnitts kommen kann. Bei Kunststoffflaschen mit grossen Ausgiessöffnungen führt dies zu Blasdüsen mit übergrossen Durchmessern. Die Abdichtung der Blasdüse an der Kreisringfläche des Supportrings muss mit relativ grossen Anpressdrücken erfolgen, um ein Entweichen des Aufblasmediums, üblicherweise Luft, zu verhindern. Bei Abnützung, Ungleichmässigkeiten oder einer Beschädigung der Blasdüse ist bei den aufeinander wirkenden Flächen eine ausreichende Abdichtung oft nur schwer zu erreichen. Die Probleme mit der Masshaltigkeit bei den Herstellverfahren des Stands der Technik werden durch den Temperaturunterschied zwischen dem innerhalb der Formkavität befindlichen Körper des Preforms und dem aus der Formkavität ragenden Halsabschnitt meist noch vergrössert.

Aus der JP 54 086560 ist ein Preform zur Herstellung von Kunststoffflaschen in einem Blas- bzw. Streckblasverfahren bekannt, der einen im wesentlichen zylindrischen, länglichen Körper aufweist, dessen eines Längsende geschlossen ausgebildet ist, und an dessen anderem Längsende ein Halsabschnitt mit einer Ausgiessöffnung ausgebildet ist. Der Halsabschnitt weist einen grösseren Aussendurchmesser auf als der Körper. Beim Aufblasvorgang dichtet die Blasdüse, deren vorderer Abschnitt eine konische Anfasung aufweist, über einen über ihren Umfang vorstehenden O-Ring im Inneren des Preforms seitlich ab.

In der US-6,273,705 ist ein Blasverfahren für Kunststoffbehälter beschrieben, bei dem die Blasdüse über einen O-Ring gegen die Innenwandung im Halsbereich des O-Rings abdichtet.

Die WO 98/52729 zeigt verschiedene Preform Varianten, die ohne Supportring ausgebildet sind. Hinsichtlich des Handlings dieser Preforms ist dem Dokument nichts näheres zu entnehmen. Während des Blasvorgangs erfolgt eine Abdichtung vermutlich über einen O-Ring an der Stirnfläche der Blasdüse, der gegen die Stirnfläche des Preforms gepresst wird. Preformdurchmesser und Weite der Blasdüse müssen exakt aufeinander abgestimmt sein.

US-6,264,050 zeigt verschieden Preforms, die durch Tiefziehen oder Fliesspressen hergestellt sind. Beim Aufblasvorgang erfolgt eine Abdichtung der Blasdüse je nach Ausführung des Preforms vermutlich an der Oberseite eines von der Preformöffnung abragenden Flansches bzw. eines vom Umfang abragenden Supportringes. Diese Art der Abdichtung ist konventionell und erfolgt über einen oder mehrere zusätzliche, an der Blasdüse angeordnete O-Ringe. Aufgabe der vorliegenden Erfindung ist es daher, die geschilderten Nachteile des Stands der Technik zu beheben. Die Kosten für die Herstellung eines Kunststoffbehälters, insbesondere einer Kunststoffflasche, in einem Spritzblas- bzw. Spritzstreckblasverfahren sollen verringert werden können. Beschädigungen der Dichtfläche einer hergestellten Kunststoffflasche sollen verhindert werden. Dabei sollen Blasdüsen mit übergross dimensionierten Mündungen vermieden werden. Während des Blasprozesses soll eine gute Abdichtung zwischen dem Preform und der Blasdüse gewährleistet sein. Die Korrekte Ausrichtung der Blasdüse und deren mechanische Beschaffenkeit im Blasdüsenmündungsbereich soll einfach überprüfbar sein.

Die Lösung dieser Aufgaben besteht in einem Verfahren zur Herstellung einer Kunststoffflasche durch Aufblasen eines Preforms, welches die im kennzeichnenden Abschnitt des Patentanspruchs 1 angeführten Merkmale aufweist. Weiterbildungen und/oder vorteilhafte Ausführungsvarianten der Erfindung sind Gegenstand des abhängigen Ansprüches.

Die Erfindung schlägt ein Verfahren zur Herstellung einer Kunststoffflasche, insbesondere einer PET-Flasche, vor, bei dem ein Preform, der einen einseitig geschlossenen Körper aufweist, an den ein Halsabschnitt mit einer Ausgiessöffnung anschliesst, und der in einem Kunststoffspritzverfahren oder in einem Fliesspressverfahren hergestellt ist, in eine Formkavität einer Blasform eingebracht und mit Hilfe einer Blasdüse durch Überdruck gemäss der Formkavität aufgeblasen wird. Die Abdichtung zwischen der Blasdüse und dem Preform erfolgt im Inneren des Preforms.

Indem die Abdichtung im Inneren des Preforms erfolgt, werden Deformationen des Halsabschnitts, insbesondere der die Ausgiessöffnung berandenden Stirnfläche vermieden. Gegenüber den Verfahrensvarianten, bei denen die Abdichtung auf der Oberseite des umlaufenden Supportrings erfolgt, weist das erfindungsgemässe Verfahren den Vorteil auf, dass die Blasdüse einen deutlich kleineren Durchmesser aufweist. Da die Abdichtung nunmehr im Inneren des Preforms erfolgt, muss die Blasdüse den oberhalb des Supportrings befindlichen Halsabschnitt des Preforms nicht mehr aufnehmen. Dadurch ist auch die Gefahr von Beschädigungen von an der Aussenseite des Halsabschnittes vorgesehenen Gewindeabschnitten oder dergleichen beseitigt. Die Dimensionierung der Blasdüse kann durch die erfindungsgemässe Verfahrensführung auch bei der Herstellung von Kunststoffflaschen mit grösseren Durchmessern der Ausgiessöffnung klein gehalten werden. Dies hat Vorteile hinsichtlich der Ausbildung der Blasdüse, hinsichtlich der erforderlichen Anpresskräfte und auch bezüglich der für den Blasprozess erforderlichen Mediendrücke. Durch die Abdichtung im Inneren des Preforms kann auch die Wandstärke im Halsabschnitt verringert werden. Auf einen umlaufenden Supportring, der den Körper des Preforms vom Halsabschnitt trennt kann gänzlich verzichtet werden. Dies führt zu einer nicht unerheblichen Materialeinsparung, welche sich vorteilhaft auf die Herstellkosten der Kunststoffflasche auswirkt.

Die Abdichtung zwischen der Blasdüse und dem Preform im Inneren des Preforms erfolgt durch einen ringförmigen Kontakt der Mündung der Blasdüse mit einer Innenfläche im Halsabschnitt des Preforms. Die Abdichtung erfolgt auch bei dem erfindungsgemässen Verfahren allein durch den direkten Kontakt der Dichtpartner.

Es ist auch möglich, dass die Abdichtung zwischen der Blasdüse und dem Preform in einem Übergangsbereich des Halsabschnitts zum zylindrischen Körper des Preforms erfolgt. Im Übergangsbereich weist der Preform eine erhöhte Steifigkeit auf. Dadurch können unerwünschte Verformungen noch besser vermieden werden.

Die für die Abdichtung herangezogene Innenfläche des Halsabschnitts ist mit Vorteil eine Konusfläche. Im Zusammenwirken der Konusfläche mit dem Mündungsrand der Blasdüse ergibt sich im wesentlichen ein linienförmiger Kontakt. Die Anpresskraft der Blasdüse kann derart reguliert werden, dass sich der Mündungsrand geringfügig in die Konusfläeingräbt. Dies hat den Vorteil, dass durch den Abdruck an der fertig geblasenen Kunststoffflasche überprüft werden kann, ob die Blasdüse korrekt justiert ist oder Beschädigungen aufweist.

Die für die Abdichtung herangezogene Innenfläche des Preforms kann auch eine senkrecht zur Achse des Preforms verlaufende Ringfläche sein. Auch in diesem Fall erweist sich eine Abdichtung über einen Linienkontakt von Vorteil. Dazu ist der Mündungsrand der Blasdüse entsprechend scharfkantig oder mit einem Radius versehen.

Das erfindungsgemässe Verfahren ist sowohl für Blasverfahren als auch für das Streckblasverfahren, bei dem der Preform zusätzlich zum Aufblasen mit einem Reckdorn verstreckt wird, geeignet.

Der Preform weist wenigstens in einem an die Ausgiessöffnung angrenzenden Bereich einen grösseren Innendurchmesser auf als der Körper. Der grössere Innendurchmesser erleichtert das Einfahren der Blasdüse. Aus dieser geometrischen Ausbildung resultiert ein Übergang auf einen kleineren Innendurchmesser des Körpers des Preforms, der für die Abdichtung genutzt wird. Dieser Übergang kann als eine umlaufende radiale Fläche ausgebildet sein. Es erweist sich als vorteilhaft, wenn eine Innenfläche des Halsabschnitts im Übergangsbereich zum Körper des Preforms als Konusfläche ausgebildet ist. Die Konusfläche ermöglicht eine sehr zuverlässige Abdichtung der Blasdüse mit der Innenfläche des Preforms. Dabei kommt es zu einem linienförmigen Kontakt der Dichtpartner. Durch die Einstellung der Anpresskraft der Blasdüse wird sichergestellt, dass sich der Mündungsrand der Blasdüse auf der Innenfläche abbildet und auch an der fertig geblasenen Kunststoffflasche sichtbar ist. So erhält man eine einfache Kontrolle über die Justierung der Blasdüse und über die mechanische Beschaffenheit der Kontaktbereiche.

Für die einfache Herstellung von Kunststoffflaschen mit relativ weiten Öffnungen besitzt der Preform eine Ausgiessöffnung mit einem Öffnungsdurchmesser von etwa 35 mm bis etwa 95 mm. Derartige Weithalsflaschen sind mit den konventionellen Verfahren nur sehr schwer herstellbar. Ihre Herstellung bedingt spezielle Blasdüsen und beinhaltet immer die Gefahr einer Beschädigung des Halsabschnitts durch das Anpressen der Blasdüse.

Als Materialien für den Preform kommen alle für das Spritzblas- bzw. Spritzstreckblasverfahren geeigneten Materialien in Frage. Beispielsweise sind dies PET, PET-G, HDPE, PP, PVC oder auch gefüllte Kunststoffe. Vorzugsweise ist der Preform in einem Kunststoffspritzverfahren oder auch in einem Fliesspressverfahren aus PET hergestellt.

Weitere Vorteile und Merkmale der Erfindung ergeben sich aus der nachfolgenden Beschreibung in Verbindung mit den nicht massstabsgetreuen, schematischen Darstellungen. Es zeigen:
Fig. 1 einen in eine Blasform eingesetzten Preform mit angesetzter Blasdüse; und
Fig. 2 eine vergrösserte Detaildarstellung gemäss dem strichlierten Rahmen X in Fig. 1.

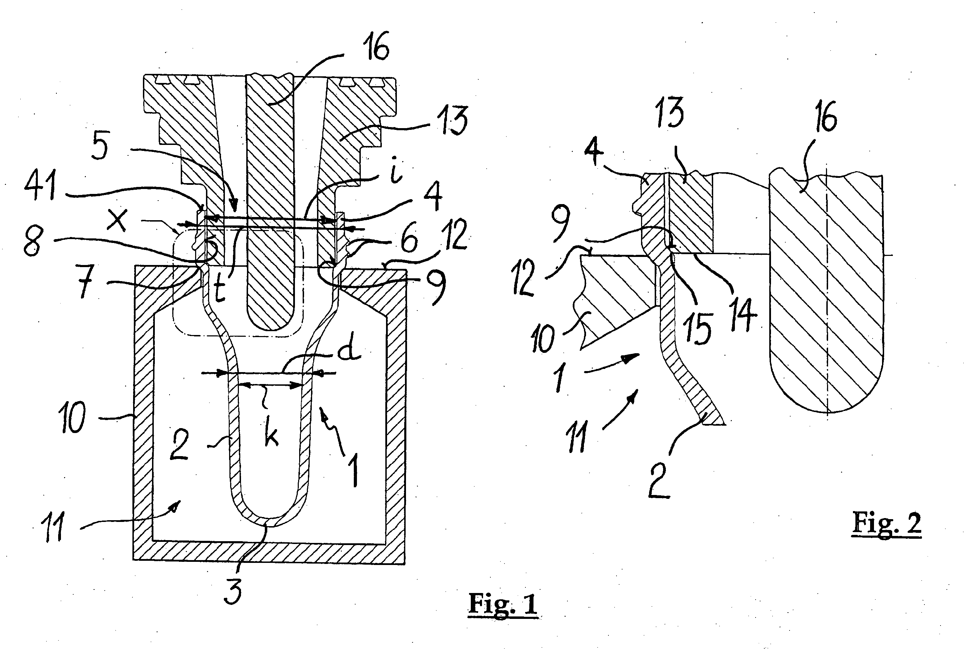

Der in Fig.1 dargestellte Preform 1 weist einen länglichen Körper 2 auf, dessen eines Längsende 3 verschlossen ausgebildet ist. Am gegenüberliegenden Längsende ist ein Halsabschnitt 4 mit einer Ausgiessöffnung 5 ausgebildet. An der Aussenseite des Halsabschnitts 4 sind Gewindeabschnitte 6 ausgebildet, die an der fertig geblasenen Kunststoffflasche für die Festlegung einer Verschlusskappe oder dergleichen dienen. Aus Fig. 1 ist ersichtlich, dass der Körper 2 einen Aussendurchmesser d aufweist, der kleiner ist als der Aussendurchmesser t des Halsabschnitts 4. Am Übergang vom Halsabschnitt 4 zum Körper 2 ist am Preform 1 eine umlaufende Ringschulter 7 ausgebildet. Die Ringschulter 7 verläuft bei dem dargestellten Ausführungsbeispiel des Preforms 1 radial. Sie kann aber auch als Konusfläche ausgebildet sein. Die Ringschulter 7 dient als Angriffsbereich für Transportmittel für den Preform 1 und als Abstützfläche gegenüber der Blasform.

Der Halsabschnitt 4 weist einen Innendurchmesser i auf, der grösser ist als der Innendurchmesser k des Körpers 2 des Preforms 1. Dabei kann der Innendurchmesser k des Körpers 2 des Preforms auch gestuft ausgebildet sein. Der Innendurchmesser i des Halsabschnitts 4 beträgt im Bereich der Ausgiessöffnung 5 für die Herstellung sogenannter Weithalsflaschen beispielsweise etwa 35 mm bis etwa 95 mm. Der Halsabschnitt 4 weist eine Innenfläche 8 auf, die in einem Übergangsbereich 9 in eine Innenfläche des Körpers 2 übergeht. Bei dem dargestellten Ausführungsbeispiel des Preforms 1 ist die Innenfläche 8 im Übergangsbereich 9 als Konusfläche ausgebildet. In alternativen Ausführungsvarianten kann die Innenfläche im Übergangsbereich auch als radiale Ringfläche ausgebildet sein. Der konische Abschnitt 9 der Innenfläche 8 des Halsabschnitts 4 dient beim Blasprozess zur Abdichtung gegenüber der Blasdüse.

Der Preform 1 kann aus allen für den Spritzblas- bzw. Spritzstreckblasverfahren geeigneten Kunststoffen bestehen. Dies sind beispielsweise PET, PET-G, HDPE, PP, PVC oder auch aus einem gefüllten Kunststoff. Ein bevorzugtes Material ist PET (Polyethylenterephthalat). Die Herstellung des Preforms 1 erfolgt beispielsweise in einem Kunststoffspritzverfahren oder in einem Fliesspressverfahren. Die Herstellung des Preforms 1 kann unmittelbar vor dem Blasprozess erfolgen. Die Preforms 1 können aber auch separat hergestellt und gelagert werden, bis sie für die Herstellung der Kunststoffflasche benötigt werden.

Wie aus Fig. 1 und insbesondere aus der Detaildarstellung in Fig. 2 ersichtlich ist, ist der Preform 1 in eine Blasform 10 eingesetzt. Die Blasform 10 besitzt eine Formkavität 11, welche die Gestalt der aufzublasenden Kunststoffflasche festlegt. Der Preform 1 stützt sich mit der als Ringschulter ausgebildeten Abstützfläche 7 auf der Oberfläche 12 der Blasform ab. Die Abstützfläche 7 verhindert, dass der Preform 1 in die Formkavität 11 der Blasform fällt. Der Halsabschnitt 4 des Preforms 1 erstreckt sich ausserhalb der Formkavität 11 und wird vom Blasprozess nicht beeinträchtigt. Insbesondere dürfen die Stirnfläche 41 des Halsabschnitts 4, die bei der aufgeblasenen Kunststoffflasche als Dichtfläche dient, und die an der Aussenseite des Halsabschnitts 4 ausgebildeten Gewindeabschnitte 6 nicht verformt oder beschädigt werden.

Das Aufblasen des Preforms 1 erfolgt mit Blasdrücken von bis zu 40 bar und mehr. Dazu muss zwischen dem Preform 1 und einer Blasdüse 13 für eine ausreichende Abdichtung gesorgt werden. Gemäss dem neuen Verfahren erfolgt die Abdichtung im Inneren des Preforms 1. Dazu wird die Blasdüse 13 in das Innere des Preforms eingefahren, bis der Mündungsrand 14 der Blasdüse 13 an dem als Konusfläche ausgebildeten Übergangsabschnitt 9 der Innenfläche 8 des Halsabschnitts 4 anliegt. Die Abdichtung erfolgt durch einen Linienkontakt zwischen der Aussenkante 15 der Blasdüse 13 und der Konusfläche 9. Die Anpresskraft der Blasdüse 13 wird derart gewählt, dass sich die Aussenkante 15 der Blasdüse 13 etwas in die Konusfläche 9 eingräbt. Dies verbessert die Abdichtung und ermöglicht es, an der fertig geblasenen Kunststoffflasche die korrekte Ausrichtung der Blasdüse 13 und deren mechanische Beschaffenheit im Mündungsbereich zu überprüfen. So deuten Unterbrechungen des ringförmigen Abdruckes der Blasdüse auf Beschädigungen hin. Ein nicht vollständiger ringförmiger Abdnick kann auf eine erforderliche Neuausrichtung der Blasdüse auf die Blasform hinweisen. Wie in Fig. 2 angedeutet ist, kann der Preform in einem Spritzstreckblasverfahren zusätzlich zum Blasprozess auch noch mit einem Reckdorn 16 in axialer Richtung verstreckt werden.

## Patentansprüche

1. Verfahren zur Herstellung einer Kunststoffflasche, insbesondere einer PET-Flasche, aus einem Preform (1), der einen einseitig geschlossenen Körper (2) aufweist, an den ein Halsabschnitt (4) mit einer Ausgiessöffnung (5) anschliesst, bei dem der in einem Kunststoffspritzverfahren bzw. in einem Fliesspressverfahren hergestellte Preform (1) in eine Formkavität (11) einer Blasform (10) eingebracht und mit Hilfe einer Blasdüse (13) durch Überdruck gemäss der Formkavität (11) aufgeblasen wird, die Abdichtung zwischen der Blasdüse (13) und dem Preform (1) durch einen ringförmigen, im Wesentlichen linienförmigen Kontakt der Mündung (14,15) der Blasdüse (13) mit einer Innenfläche (8) im Halsabschnitt (4) des Preforms (1) erfolgt, **dadurch gekennzeichnet, dass** der für die Abdichtung herangezogene Abschnitt der Innenfläche (8) des Halsabschnitts (4) eine Konusfläche (9) ist, und der Anpressdruck der Blasdüse (13) derart eingestellt wird, dass sich ihr Mündungsrand (15) im Kontaktbereich auf der Konusfläche (9) abbildet.

2. Verfahren nach 1, **dadurch gekennzeichnet, dass** der Preform (1) zusätzlich zum Aufblasen mit einem Reckdorn (16) verstreckt wird.

## Claims

1. Method for manufacturing a plastic bottle, in particular a PET bottle, from a preform (1) that has a body closed on one side (2) to which a neck portion (4) with a spout (5) is attached, for which the preform (1) manufactured by a plastic injection method or an impact extrusion method is brought into a mould cavity (11) of a blow mould (10) and is blown by means of a blow nozzle (13) by overpressure according to the mould cavity (11), the sealing between the blow nozzle (13) and the preform (1) is achieved by an annular, substantially linear contact of the mouth (14, 15) of the blow nozzle (13) with an internal surface (8) on the neck portion (4) of the preform (1), **characterized in that** the portion of the internal surface (8) of the neck portion (4) used for the sealing is a cone surface (9) and the contact pressure of the blow nozzle (13) is adjusted in such a manner that its mouth edge (15) is reproduced in the contact area on the cone surface (9).

2. Method according to claim 1, **characterized in that** the preform (1) additionally to the blowing up is stretched with a stretching mandrel (16).

## Revendications

1. Procédé pour la fabrication d'une bouteille en matière plastique, en particulier d'une bouteille en PET, à partir d'une préforme (1) qui présente un corps fermé d'un côté (2) auquel se rattache une portion de goulot (4) avec une ouverture de déversement (5), pour lequel la préforme (1) fabriquée par un procédé d'injection de matière plastique ou un procédé de fluage est mise en place dans une cavité de moule (11) d'un moule de soufflage (10) et est gonflée à l'aide d'une tuyère de soufflage (13) par surpression selon la cavité de moule (11), l'étanchéité entre la tuyère de soufflage (13) et la préforme (1) est réalisée par un contact en forme d'anneau, substantiellement en forme de ligne, de l'embouchure (14, 15) de la tuyère de soufflage (13) avec une face intérieure (8) dans la portion de goulot de la préforme (1), **caractérisé en ce que** la portion de la face intérieure (8) de la portion de goulot (4) est une face de cône (9) et la pression d'appui de la tuyère de soufflage (13) est réglée de telle manière que son bord d'embouchure (15) se reproduit dans la zone de contact sur la face de cône (9).

2. Procédé selon la revendication 1, **caractérisé en ce que** la préforme (1) est étirée avec un mandrin d'étirage (16) en plus du gonflage.
